(19) Europäisches Patentamt

European Patent Office

Office européen des brevets

(11) **EP 2 743 730 A1**

(12) **EUROPEAN PATENT APPLICATION**

(43) Date of publication:
**18.06.2014 Bulletin 2014/25**

(51) Int Cl.:
**G01S 19/30** (2010.01)

(21) Application number: **12008334.0**

(22) Date of filing: **14.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Astrium GmbH**
**82024 Taufkirchen (DE)**

(72) Inventors:
• **Floch, Jean-Jacques**
**D-81677 München (DE)**
• **Soualle, Francis**
**D-81543 München (DE)**
• **Wendel, Jan**
**D-81373 München (DE)**

(54) **Method of synchronizing a receiver with a received ambigous signal**

(57) A method of synchronizing a receiver with a received ambiguous signal having a known number of at least two peaks, comprises the steps of:
a) providing information about a known transmitted signal which has a given number of at least two peaks, the information including the number of peaks and the distance (s) between the at least two peaks;
b) determining the ratios between a main peak and secondary peaks of the known transmitted signal and assigning a determined ratio value to each peak;
c) deducting a theoretical auto-correlation function from said known transmitted signal, wherein the auto-correlation function has a number of correlators corresponding to the number of peaks in the known transmitted signal, wherein the different correlators are located on each of the peaks of the auto-correlation function and wherein the correlators of the auto-correlation function are provided in the same distance and have the same relative ratio as the peaks in the known transmitted signal;
d) tracking the received signal with the auto-correlation function so that the correlator pattern of the auto-correlation function is aligned with the peak pattern of the received signal by assigning each peak of the received signal to a correlator of the auto-correlation function;
e) identifying each peak.

According to the improvement as a further step an averaging of the correlators over a predetermined period of time is carried out.

Fig. 7

## Description

TECHNICAL FIELD

The invention relates to a method of synchronizing a receiver with a received ambiguous signal having a known number of at least two peaks.

BACKGROUND OF THE INVENTION

In the frame of Radio Navigation Signals, new modulated shape signals have been designed to fulfil new requirements, such as high accuracy, good spectral separation between Signals. Despite their good quality in terms of performance, these new modulations have also introduced new limitations like the ambiguity constraint of the multiple peaks in the auto-correlation function. A synchronisation on a wrong peak of the auto-correlation function (ACF) would cause a code delay error, which would itself generate an error in the positioning. The invention will detect any synchronisation on a wrong peak and offer the possibility to correct it.

PRIOR ART

Many techniques have already been proposed to solve this problem:

A first known technique is the Bump Jumping algorithm. In this technique the receiver evaluates the absolute value of the amplitude of two samples of the correlation function which are spaced by N/(2M) chip with respect to the prompt (central) correlator (the N/(2M) values apply for the case of a binary offset carrier BOC(M,N) without filtering). Then the receiver uses the amplitude of these two side peaks, as well as the amplitude of the prompt channel, to verify if the working point of the corresponding tracking loop is effectively well aligned on the central peak of the correlation function and not shifted of one or more sub-carrier symbols (a sub-carrier symbol is equal to N/(2M) chip). In case of an incompatibility between the observed amplitudes and the expected ones, the receiver applies an offset to the replica for correction and to achieve again a perfect alignment. This verification and correction (if needed) can be performed either after each integration period or at a lower rate.

This algorithm shows some limitations as soon as the transmitted signal contains some distortions or when multipath degrade the shape of the auto-correlation function. Indeed, in these cases, the amplitude of the corresponding side peaks of the correlation function can become very close to the amplitude of the central peak (especially true for large M/N ratio and/or relatively low Signal-to-Noise ratio). In that case, a biased comparison of the three correlation peaks would lead to an incorrect decision and to an unnecessary application of an offset to the replica. This would create a large error in the range estimation (several meters). Therefore, the Bump Jumping is restricted to the monitoring of two first side peaks of the ACF and not the complete ACF.

A second known technique is the Double Estimation Technique (DET). The DET consists in implementing an additional tracking loop beside the conventional Delay Lock Loop (DLL) and the Phase Lock Loop (PLL). This loop, called Sub-Carrier Lock Loop (SLL) tracks the sub-carrier embedded in the BOC signal. The sub-Carrier frequency is equal to the chip rate frequency divided by (2M/N for a BOC(M,N) signal). Once the corresponding sub-carrier replica is aligned with the sub-carrier embedded in the received signal, the DET removes it by simple multiplication; this can be considered as a sub-carrier wipe-off. The resulting output of this operation is a signal with a waveform very close to a binary phase shift keying BPSK(N). In that case the DLL will use a BPSK(N) replica to track the corresponding BPSK signal. The favourable property of the corresponding BPSK correlation is that it is unambiguous. However the corresponding peak is not that sharp.

Therefore the corresponding tracking performances are worse than those of the SLL which uses a Sub-Carrier Correlation function whose peaks are much narrower (for large M/N ratio). On the other side the correlation function for the sub-carrier replica is multimodal with 2M/N possible stable locking points, and is therefore ambiguous. Hence a complementary exists between the correlation function of the DLL (lower tracking performance but unambiguous) and the SLL (larger tracking performance but ambiguous). The DET then uses the unambiguous correlation function (from the DLL) to correct any offset of the working point of the SLL. The final DET output (range estimation) consequently benefits of the high performances of the SLL and on the ambiguity correction of the DLL.

The DET has been shown to maintain reliable and robust acquisition and tracking in high noise conditions, but the technique may not be as efficient in a real environment (multipath) or in presence of a distorted signal. Indeed both previous effects lead to an asymmetrical BPSK correlation function used by the DLL. If such asymmetries are too large then the correction brought by the unambiguous (and distorted) correlation function for the correction of the SLL might be wrong. This is the possible drawback of the DET algorithm.

A third known technique is the unambiguous tracking structure. This method is very close to the DET algorithm previously described. It consists in generating a correlation function having a single peak which is wider than the central peak of the ambiguous correlation function. A Sub-carrier tracking loop which provides the tracking performance is also implemented. In fact alterative discriminators for the DLL which process this unambiguous correlation function are applied and are different to the discriminator used for the DET. Furthermore, the module which performs the correction of the range estimation provided by the SLL, based on the output of the new DLL is also different. It is possible to determine the threshold for a correction brought to the SLL ranging output, as a function of a specified probability of detection and/or false alarm.

If an ambiguity has been detected, this method has the disadvantage to track on the signal without subcarrier, which is much more sensitive to multipath and therefore degrades the performances.

A fourth known technique is the Enhanced Sidelobes Cancellation Method. The receiver uses a replica whose waveform is different (not matched) from the waveform of the received signal (BOC(M,N)). The corresponding correlation function shows side-peaks whose amplitude is significantly lower than the side peaks of the ambiguous correlation function that would be derived with the matched (BOC(M,N)) replica. This new correlation function therefore provides a reduced probability of locking onto such side peaks (the ambiguity is thus resolved) and improves the detection performance and correction performance of algorithms like the Bump Jump algorithm.

This method solves the ambiguity, but a correlation loss appears due to the use of a signal replica shape different from the received one.

A fifth known technique is the Binary offset carrier M-code envelope detector that is described in US-A 7,555,033. This method proposes to create a correlation function presenting a single peak in a different manner than the DET and the "Unambiguous Tracking Structures". This correlation peak is not generated by wiping-off the sub-carrier from the received signal, because this sub-carrier has been successfully tracked by the mean of an SLL. Here the correlation peak is created by combining two correlation outputs: one which is generated with the in-phase and another with the quadrature phase BOC sub-carrier. The non-coherent combination of both correlation outputs provides hence a single and unambiguous peak. This method is also called Sub-Carrier Cancellation.

This method solves the ambiguity. However, its tracking performances are lower than those obtained with the original BOC signal because on one side the correlation peak is wider (smaller time resolution) and on the other side the noise contribution is increased due to the combination of several correlation functions.

In general it can be stated that except for the Bump Jump method all alternative methods try to create an unambiguous correlation peak (Side peak Cancellation, DET, Unambiguous tracking structure and Sub-Carrier cancellation). This one is either used directly for the provision of the range estimation (in case of the Sub-Carrier cancellation method) or used to correct any possible wrong tracking point of the Sub-carrier tracking loop (DET, Unambiguous tracking structure).

To overcome the above mentioned disadvantages, EP 2 463 685 A1 discloses a method of synchronizing a receiver with a received ambiguous signal having a known number of at least two peaks. This method is based on the principle to use additionally extra correlators for the detection of false peak acquisition.

INVENTION

The problem to be solved by the invention is providing of an improved fast and reliable method of synchronising a receiver with a received ambiguous signal.

This object is achieved by a method with the steps of claim 1. Preferred embodiments are set out in the dependent claims.

The method comprises the steps of:

a) providing information about a known transmitted signal which has a given number of at least two peaks, the information including the number of peaks and the distance(s) between the at least two peaks;
b) determining the ratios between a main peak and secondary peaks of the known transmitted signal and assigning a determined ratio value to each peak;
c) deducting a theoretical auto-correlation function from said known transmitted signal, wherein the auto-correlation function has a number of correlators corresponding to the number of peaks in the known transmitted signal, wherein the different correlators are located on each of the peaks of the auto-correlation function and wherein the correlators of the auto-correlation function are provided in the same distance and have the same relative ratio as the peaks in the known transmitted signal;
d) tracking the received signal with the auto-correlation function so that the correlator pattern of the auto-correlation function is aligned with the peak pattern of the received signal by assigning each peak of the received signal to a correlator of the auto-correlation function;
e) identifying each peak.

According to the improvement as a further step an averaging of the correlators over a predetermined period of time is carried out.

The suggested method is based on the principle to use additionally extra correlators for the detection of false peak acquisition which is already known from EP 2 463 685 A1. The detection will need at minimum the same number of correlators as there are peaks in the auto-correlation function. The invention thus provides a synchronisation by using a multi-correlator detector. Averaging of the correlators leads to the advantage that noise of the results can be decreased. The number of correlators can be inferior to the number of correlation peaks.

PREFERRED EMBODIMENTS

Preferably, the step of averaging of the correlators is carried out between steps c) and d) of the above explained method.

It is preferred to choose the predetermined time to be greater than 100 ms. It is further preferred to choose the predetermined time to smaller than 5 seconds. Preferably, the predetermined time is 1 second.

It is advantageous if the ratio of each peak is determined as a relation between the respective peak and the maximum peak. Thus, each peak is set in relation to the maximum peak in order to obtain the individual ratio for each peak. This feature provides a peak pattern on the basis of the respective peak ratios which is independent from the absolute values of the peaks.

In order to assign each peak of the received signal to a correlator for the auto-correlation function in step d) it is advantageous to carry out the following steps:

d1) determining the ratios between the peaks of the received signal and
d2) assigning each peak of the received signal to the correlator of the auto-correlation function which has the same ratio value as the peak to be assigned or a value which is closest to said peak.

This comparison of the peak ratio values of the received signal with the correlator ratio values of the auto-correlation function enables a reliable identification of each peak of the received signal even if the received signal is very low.

It is particular advantageous if the assignment of a peak of the received signal to the correlator of the auto-correlation function in step d2) is carried out by comparing the matrix of the peak ratios of the auto-correlation function with the matrix of the peak ratios of the received signal. The result received by this procedure is very reliable.

It is to be understood that both the foregoing general description and the following detailed description of the inventor's method are exemplary and explanatory which are intended to provide further explanation of the invention as claimed.

BRIEF DESCRIPTION OF THE DRAWINGS

The above objects of the present invention will become more apparent upon consideration of the presently preferred embodiments of the present invention with reference to the attached drawings in which

Fig. 1     shows a first example of an Auto-Correlation Function (ACF);

Fig. 2     shows a table of the evaluation of the ratio between the different peaks in the ACF of fig. 1;

Fig. 3     shows a second example of a false acquisition of an Auto-Correlation Function (ACF);

Fig. 4     shows a table of the evaluation of the ratio between the different peaks in the ACF of fig. 3;

Fig. 5     shows a plurality of normalized correlation function of Binary Offset Carrier Sinus' (BOCs);

Fig. 6     shows a plurality of correlators after averaging;

Fig. 7     shows a receiver architecture designed to apply the technique according to the present invention; and

Fig. 8     shows a table of selected correlators.

DETAILED DESCRIPTION OF THE DRAWINGS

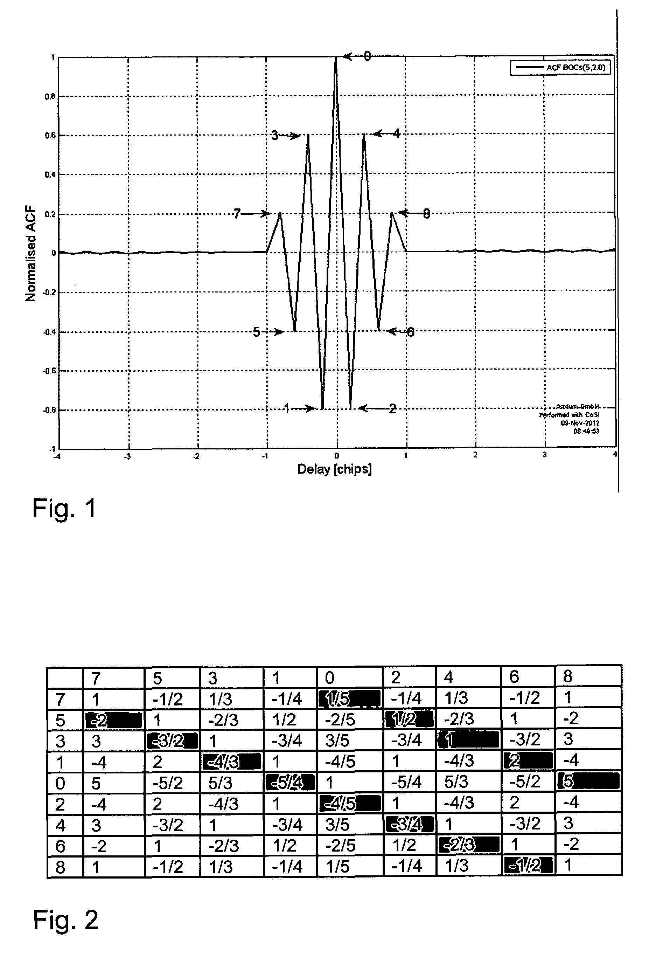

The principle of the invention is to use additionally extra correlators for the detection of false peak acquisition. The detection will need at minimum, the same number of correlators as there are peaks in the auto-correlation function. In particular, the number of correlators can be inferior to the number of correlation peaks. An example of an auto-correlation function (ACF) is presented in fig. 1 for the signal "Binary Offset Carrier Sinus" BOCs (5,2). The "normalised ACF" (amplitude in fig. 1) shown in fig. 1 does not consider distortions due to payload and receiver. The delay [chips] corresponds to a distance in chip and not in meter.

In this particular case, the application of this method would require nine correlators corresponding to the number of peaks "0", ... "8" in the ACF. If the receiver is perfectly synchronised, the correlator "0" will track the main peak and the other correlators will monitor for the secondary peaks.

As the transmitted signal is known, its theoretical auto-correlation function can be very easily deduced. The distance between two peaks is then known. Each correlator is associated to a peak; the distance between the correlators corresponds to the distance between the peaks.

To apply this technique, the principle would be initially to evaluate the ratio between the different correlators located on each of the ACF's peak. The ACF would be characterised at the input of the receiver correlators considering the real distortions due to the payload and analog distortions in the receiver (e.g. Radio Frequency Front-End). During the acquisition, pulling and tracking the receiver would have to compare the ratio of the different correlators with the theoretical ones. If the differences of the ratios are higher or lower than a pre-defined threshold, a false peak synchronization will be detected and will be corrected in order to be inline with the theoretical results, knowing that correlator "0" needs to track the central peak.

An example of the evaluation of the ratio between the different peaks are presented in the table of fig. 2 for the BOCs (5,2) ACF without any distortion. The table shows the theoretical ratio of the ACF BOCs (5,2) correlators.

In the table of fig. 2 the evaluation of the ratio between the different peaks of the BOCs (5,2) ACF without any distortion is shown as an example. This evaluation is numerically evaluated from the ACF. In this first example, the correlator "0" tracks the main peak. As the payload output signal is well known and analog distortions in the receiver can be characterized by the receiver manufacturer, the ACF can be evaluated and then the ratio between the peaks of the ACF can be evaluated. The evaluation of the ratio between the different ACF peaks is illustrated in the table in fig. 2. It is an example done for the signal BOCs (5,2).

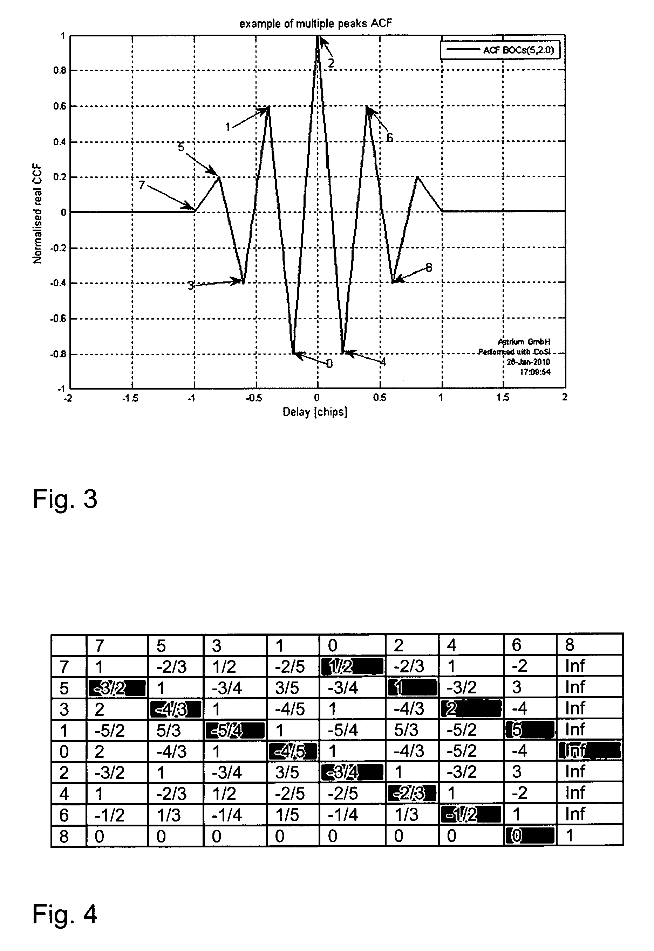

An example of a false acquisition is shown in fig. 3 for the BOCs (5,2). The correlator "0" tracks the first secondary peak. In this second example, the correlator "2" tracks the main peak. To detect this false acquisition, the receiver will measure the values obtained for each correlator, and will evaluate the ratio between these values. In that case, the ratios between the different peaks are evaluated. The results are shown in the table of fig. 4. To clarify the method and to show the symmetry in an easier way, the order of the table corresponds to the order presented in fig. 2.

By comparing the reference matrix, and the matrix evaluated in the receiver, the false peak acquisition can easily be detected. In the table, we observe that the diagonals of the matrix are going "up".

If we define the elements of the matrix by $a_{i,j}$, and the elements of the evaluated matrix $b_{i,j}$, n corresponds to the number of jumps we need to correct the false acquisition. In this case, n=1

$$b_{i,j} = a_{i+n,j+n}$$

$$b_{i,j} = \begin{cases} a_{i+n,j+n} & \text{for } i \neq j_s \\ 1 & \text{for } i = j \end{cases}.$$

If an integration time is not long enough, the noise will dominate the output results of the correlators. In order to decrease on the noise of the results, the correlator outputs are averaged over a short period of time.

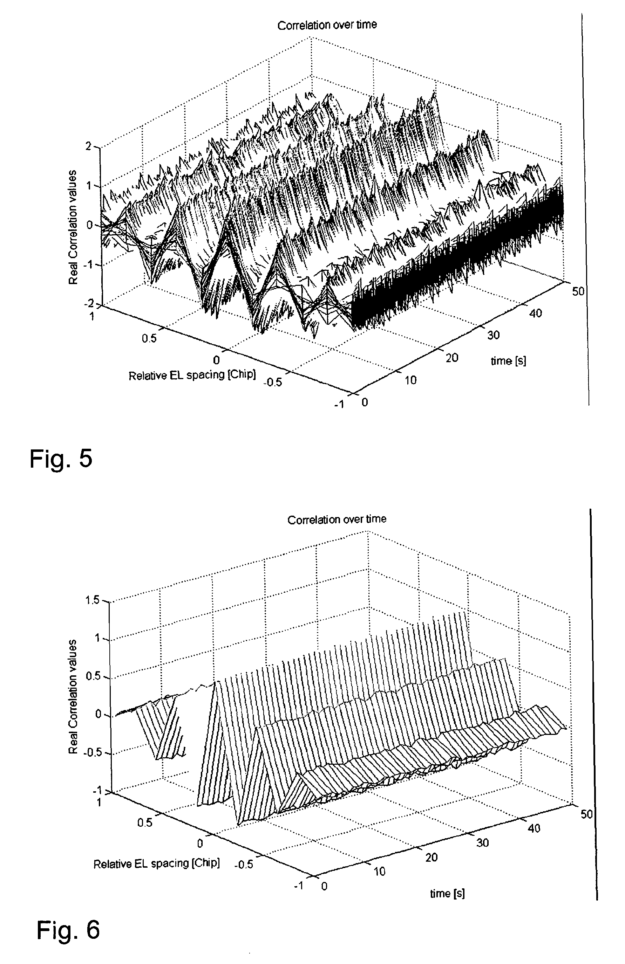

As example, fig. 5 illustrates the normalised correlation function of Binary Offset Carrier Sinus" BOCs (5, 2). Illustrated are "Real Correlation values" vs. "Relative EL spacing [chip]" over a time period of 50 seconds. The Correlation function is evaluated in an AWGN, 30 dBHz, during 50 seconds with a set of correlators situated on the peak of the correlation function. The integration time, 10 ms, is not sufficient to be able distinguish the peaks due to noise.

In contrast, fig. 6 illustrates an example, in which the correlators are averaged over 1 second. In the figure, the correlator outputs after averaging are shown.

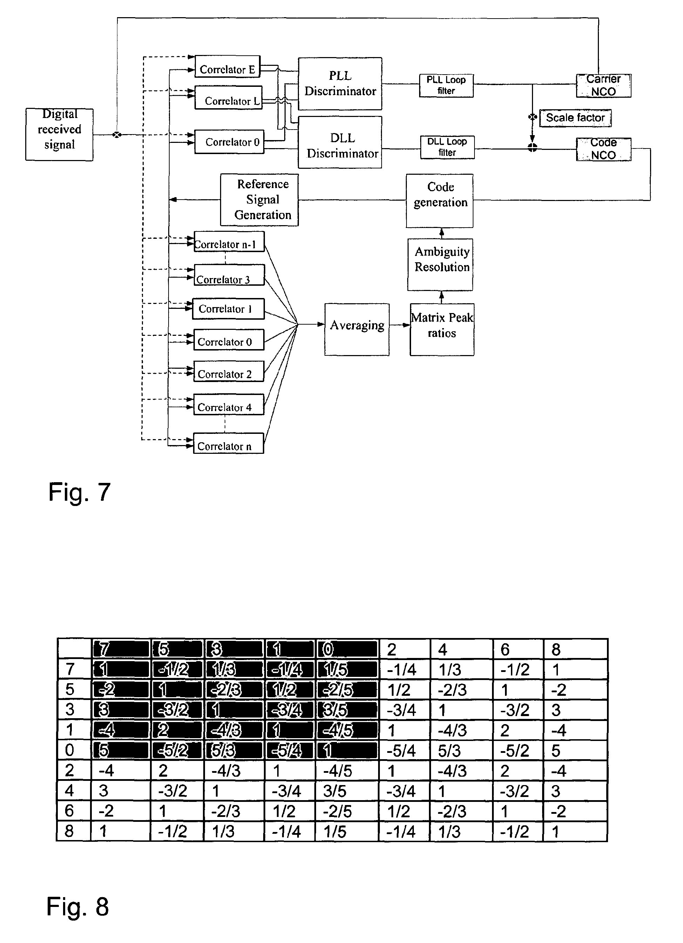

Fig. 7 shows a receiver architecture designed to apply the so-called "APRE" technique. The receiver architecture is composed of a Delay Lock Loop (DLL) fed by Early, Late, Punctual correlators. Extra correlators can also be used if needed by the Code discriminator (in case of the double-Delta Discriminator). The APRE technique is not dependent on the type of DLL discriminator and could be used as a correction blocks for all possible DLL. The DLL is composed of a DLL loop filter as well as a Code Numerical Controlled Oscillator (NCO). The Phase Lock Loop (PLL) is fed by the punctual correlator "correlator 0". As for the DLL, the APRE technique is not dependent on the PLL discriminator. New types of PLL discriminators could also be used. The PLL is composed of a PLL loop filter as well as a Carrier NCO. It is a standard navigation receiver architecture.

To be able to solve the ambiguity, at least, "n" other correlators are needed. "n" corresponds to the number of secondary lobes present in the ACF. The ratios between the different outputs of the correlators are averaged and compared to the theoretical matrix as explained previously. If a wrong peak synchronisation is detected by this comparison, the compensation delay necessary to be synchronised to the centre peak is transmitted to the code generation.

If the number of correlators is inferior to the number of peaks in the correlation function, the selection of the correlators has to be optimized. The correlators have to be chosen on the left side of the correlation function, as they will be almost insensitive to multipath. The correlators on the right side will be much more sensitive to multipath.

As an example, if only four extra correlators are available to apply this method, they have to be selected on the left side of the "ACF". In the table of fig. 8 the four selected correlators are shown grey shaded (7,5,3,1). The correlator 0 is already used by the PLL. The remaining correlators 2, 4, 6, 8 are not selected for this method.

The advantage of the inventive method is that the distortions of the transmitted signal will not impact the performance as the method uses a referenced ACF considering the payload distortions and analog distortions (e.g. Radio Frequency Front-End) in the receiver. The known prior art solutions are more sensitive to these distortions. Due to the high number of information, the probability of a missed detection is very low even in a multi-path environment. The attractive properties about this method are that it uses the properties of the ACF which insures that the acquisition is done on the correct peak, centre of the ACF even in a stringent environment.

While the inventive method and the inventive auto-correlator have been described in conjunction with a specific example, it is evident that alternatives, modifications and variations will be apparent to those skilled in the art in light of the foregoing description. Accordingly, it is intended to cover all such alternatives, modifications and variations which fall within the scope of the claims.

## Claims

1. A method of synchronizing a receiver with a received ambiguous signal having a known number of at least two peaks, said method comprising the steps of:

   a) providing information about a known transmitted signal which has a given number of at least two peaks, the information including the number of peaks and the distance(s) between the at least two peaks;
   b) determining the ratios between a main peak and secondary peaks of the known transmitted signal and assigning a determined ratio value to each peak;
   c) deducting a theoretical auto-correlation function from said known transmitted signal, wherein the auto-correlation function has a number of correlators corresponding to the number of peaks in the known transmitted signal wherein the different correlators are located on each of the peaks of the auto-correlation function and wherein the correlators of the auto-correlation function are provided in the same distance and have the same relative ratio as the peaks in the known transmitted signal;
   d) tracking the received signal with the auto-correlation function so that the correlator pattern of the auto-correlation function is aligned with the peak pattern of the received signal by assigning each peak of the received signal to a correlator of the auto-correlation function;
   e) identifying each peak

   **characterized in** the further step of carrying out an averaging of the correlators over a predetermined period of time.

2. A method according to claim 1,
   **characterized in that** the step of averaging of the correlators is carried out between steps c) and d) of the above explained method.

3. A method according to claim 1 or 2,
   **characterized in that** the predetermined time is greater than 100 ms.

4. A method according to one of the preceding claims,
   **characterized in that** the predetermined time is smaller than 5 seconds.

5. A method according to one of the preceding claims,
   **characterized in that** the predetermined time is 1 second.

6. A method according to one of the preceding claims,
   **characterized in that** the ratio of each peak is determined as a relation between the respective peak and the maximum peak.

7. A method according to one of the preceding claims,
   **characterized in that** the following steps are carried out in order to assign each peak of the received signal to a correlator of the auto-correlation function in step d):

   d1) determining the ratios between the peaks of the received signal
   d2) assigning each peak of the received signal to the correlator of the auto-correlation function which has the same ratio value as the peak to be assigned or a ratio value which is closest to said peak.

8. A method according to claim 7,
   **characterized in that** assigning a peak of the received signal to the correlator of the auto-correlation function in step d2) is carried out by comparing the matrix of the peak ratios of the auto-correlation function with the matrix of the peak ratios of the received signal.

Fig. 1

| | 7 | 5 | 3 | 1 | 0 | 2 | 4 | 6 | 8 |
|---|---|---|---|---|---|---|---|---|---|
| 7 | 1 | -1/2 | 1/3 | -1/4 | 1/5 | -1/4 | 1/3 | -1/2 | 1 |
| 5 | -2 | 1 | -2/3 | 1/2 | -2/5 | 1/2 | -2/3 | 1 | -2 |
| 3 | 3 | -3/2 | 1 | -3/4 | 3/5 | -3/4 | 1 | -3/2 | 3 |
| 1 | -4 | 2 | -4/3 | 1 | -4/5 | 1 | -4/3 | 2 | -4 |
| 0 | 5 | -5/2 | 5/3 | -5/4 | 1 | -5/4 | 5/3 | -5/2 | 5 |
| 2 | -4 | 2 | -4/3 | 1 | -4/5 | 1 | -4/3 | 2 | -4 |
| 4 | 3 | -3/2 | 1 | -3/4 | 3/5 | -3/4 | 1 | -3/2 | 3 |
| 6 | -2 | 1 | -2/3 | 1/2 | -2/5 | 1/2 | -2/3 | 1 | -2 |
| 8 | 1 | -1/2 | 1/3 | -1/4 | 1/5 | -1/4 | 1/3 | -1/2 | 1 |

Fig. 2

example of multiple peaks ACF

Fig. 3

| | 7 | 5 | 3 | 1 | 0 | 2 | 4 | 6 | 8 |
|---|---|---|---|---|---|---|---|---|---|
| 7 | 1 | -2/3 | 1/2 | -2/5 | 1/2 | -2/3 | 1 | -2 | Inf |
| 5 | -3/2 | 1 | -3/4 | 3/5 | -3/4 | 1 | -3/2 | 3 | Inf |
| 3 | 2 | -4/3 | 1 | -4/5 | 1 | -4/3 | 2 | -4 | Inf |
| 1 | -5/2 | 5/3 | -5/4 | 1 | -5/4 | 5/3 | -5/2 | 5 | Inf |
| 0 | 2 | -4/3 | 1 | -4/5 | 1 | -4/3 | -5/2 | -4 | Inf |
| 2 | -3/2 | 1 | -3/4 | 3/5 | -3/4 | 1 | -3/2 | 3 | Inf |
| 4 | 1 | -2/3 | 1/2 | -2/5 | -2/5 | -2/3 | 1 | -2 | Inf |
| 6 | -1/2 | 1/3 | -1/4 | 1/5 | -1/4 | 1/3 | -1/2 | 1 | Inf |
| 8 | 0 | 0 | 0 | 0 | 0 | 0 | 0 | 0 | 1 |

Fig. 4

Fig. 5

Fig. 6

Fig. 7

| | 7 | 5 | 3 | 1 | 0 | 2 | 4 | 6 | 8 |
|---|---|---|---|---|---|---|---|---|---|
| 7 | 1 | -1/2 | 1/3 | -1/4 | 1/5 | -1/4 | 1/3 | -1/2 | 1 |
| 5 | -2 | 1 | -2/3 | 1/2 | -2/5 | 1/2 | -2/3 | 1 | -2 |
| 3 | 3 | -3/2 | 1 | -3/4 | 3/5 | -3/4 | 1 | -3/2 | 3 |
| 1 | -4 | 2 | -4/3 | 1 | -4/5 | 1 | -4/3 | 2 | -4 |
| 0 | 5 | -5/2 | 5/3 | -5/4 | 1 | -5/4 | 5/3 | -5/2 | 5 |
| 2 | -4 | 2 | -4/3 | 1 | -4/5 | 1 | -4/3 | 2 | -4 |
| 4 | 3 | -3/2 | 1 | -3/4 | 3/5 | -3/4 | 1 | -3/2 | 3 |
| 6 | -2 | 1 | -2/3 | 1/2 | -2/5 | 1/2 | -2/3 | 1 | -2 |
| 8 | 1 | -1/2 | 1/3 | -1/4 | 1/5 | -1/4 | 1/3 | -1/2 | 1 |

Fig. 8

Europäisches
Patentamt

European
Patent Office

Office européen
des brevets

**EUROPEAN SEARCH REPORT**

Application Number

EP 12 00 8334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2012/140857 A1 (FLOCH JEAN-JACQUES [DE] ET AL) 7 June 2012 (2012-06-07) * claims 1-4 * | 1-8 | INV. G01S19/30 |
| A | US 2004/234008 A1 (DIGGELEN FRANK VAN [US] ET AL VAN DIGGELEN FRANK [US] ET AL) 25 November 2004 (2004-11-25) * par. 32 * | 1-8 | |

TECHNICAL FIELDS
SEARCHED (IPC)

G01S

The present search report has been drawn up for all claims

| Place of search | Date of completion of the search | Examiner |
|---|---|---|
| Munich | 7 March 2013 | González Moreno, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 00 8334

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2013

| Patent document cited in search report | Publication date | Patent family member(s) | Publication date |
|---|---|---|---|
| US 2012140857 A1 | 07-06-2012 | EP 2463685 A1<br>US 2012140857 A1 | 13-06-2012<br>07-06-2012 |
| US 2004234008 A1 | 25-11-2004 | US 2004234008 A1<br>US 2009304051 A1 | 25-11-2004<br>10-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7555033 A

- EP 2463685 A1